# EUROPÄISCHE PATENTSCHRIFT

(11) **EP 1 650 450 B1**
(45) Veröffentlichungstag und Bekanntmachung des Hinweises auf die Patenterteilung: **25.08.2010**
(21) Anmeldenummer: 05022198.5
(22) Anmeldetag: 12.10.2005
(51) Int. Cl.: F16C 33/38, F16H 25/22, F16C 29/06

(54) **Kugelgewindetrieb**
Ball screw
Vis à billes

(30) Priorität: 22.10.2004 DE 102004051425
(43) Veröffentlichungstag der Anmeldung: 26.04.2006
(73) Patentinhaber: Schaeffler KG, 91074 Herzogenaurach (DE)
(72) Erfinder: Osterlänger, Jürgen, 91448 Emskirchen (DE); Mayer, Ralf, 91074 Herzogenaurach (DE)

(56) Entgegenhaltungen:
- EP-A- 0 857 883
- EP-A- 0 985 851
- DE-A1- 10 135 565

## Beschreibung

Die vorliegende Erfindung betrifft einen Kugelgewindetrieb. Kugelgewindetriebe wandeln eine rotierende in eine Längsbewegung um. Kugelgewindetriebe finden beispielsweise Anwendung in elektromechanischen Lenkungen von Kraftfahrzeugen, wobei die Kugelrollspindel an der Zahnstange der Zahnstangenlenkung ausgebildet sein kann.

Aus EP 0 985 851 A1 beispielsweise ist ein Kugelgewindetrieb bekannt geworden, bei dem eine Spindelmutter drehbar auf einer Kugelrollspindel angeordnet ist. Zwischen der Spindelmutter und der Kugelrollspindel angeordnete Kugeln laufen in einem endlosen Umlaufkanal um. Dieser Umlaufkanal umfasst einen Lastabschnitt, der begrenzt ist von einer an der Spindelmutter angeordneten Gewindebahn und von einer an der Kugelrollspindel angeordneten Gewindebahn. Dieser Umlaufkanal umfasst ferner einen Rücklaufabschnitt, der durch eine so genannte Außenumlenkung gebildet ist. Kugeln werden von einem Ende des Lastabschnitts durch den Rücklaufabschnitt zurück zu dem Anfang des Lastabschnittes rückgeführt. Die Kugeln sind in Käfigtaschen eines Käfigbandes angeordnet. Jede Käfigtasche nimmt jeweils eine Kugel auf, wobei die Käfigtaschen an ringförmigen Äquatorringen gebildet sind, die die Kugeln am Kugeläquator umgreifen. Einander benachbart angeordnete Äquatorringe sind mittels Verbindungsstücke einstückig miteinander verbunden. Während eines vollständigen Umlaufs durch den Umlaufkanal wird das Käfigband gebogen, wobei die Verbindungstücke elastisch um quer zum Käfigband angeordnete Biegeachsen Aufgabe der vorliegenden Erfindung ist es, einen Kugelgewindetrieb nach den Merkmalen des Oberbegriffs des Anspruchs 1 anzugeben, bei dem das Käfigband einwandfrei im Umlaufkanal umlaufen kann. Erfindungsgemäß wird diese Aufgabe durch den Kugelgewindetrieb gemäß Anspruch 1 gelöst Während eines Umlaufs durch den Umlaufkanal wird das Käfigband um eine Biegeachse gebogen, wobei diese Biegeachse unterschiedliche Lagen in einer Ebene quer zum Käfigband einnehmen kann. Die erfindungsgemäß vorgesehene Gestaltung des Verbindungsstückes mit annähernd gleichgroßen Widerstandsmomenten um diese in der Lage variierende Biegeachse ermöglicht ein gleichartiges Verhalten des Käfigbandes in Bezug auf Biegung. Ein weicher und geräuscharmer Umlauf des Käfigbandes ist somit gewährleistet. Dieser weiche Umlauf gewinnt zunehmend an Bedeutung in elektromechanischen Lenkungen von Kraftfahrzeugen. Eine leichtgängige und geräuscharme Betätigung des Kugelgewindetriebes wird hier angestrebt.

Erfindungsgemäß ist vorgesehen, dass das Verbindungsstück im Querschnitt durch das Käfigband gesehen im Wesentlichen kreisförmig ausgebildet ist, wobei das Verhältnis vom Durchmesser des kreisförmigen Querschnitts des Verbindungsstückes zum Kugeldurchmesser Werte zwischen 0,1 bis 0,4 annimmt. Bei einem kreisförmigen Querschnitt ist das Widerstandsmoment um beliebige Biegeachsen quer zum Käfigband vom Betrag her gleichgroß. Es wurde herausgefunden, dass Kugelgewindetriebe einen besonders weichen und geräuscharmen Umlauf des Käfigbandes ermöglichen, wenn das erwähnte Verhältnis eingestellt ist.

Die zuvor erwähnten Verhältnisse ermöglichen besonders leichtgängige und geräuscharme Kugelumläufe bei Kugelgewindetrieben, in denen der Kugeldurchmesser Werte zwischen 3 mm bis 10 mm annimmt.

Im Rücklaufabschnitt des Umlaufskanals werden die Verbindungsstücke gebogen. Es wurde herausgefunden, dass der Durchschiebewiderstand des mit den Kugeln versehenen Käfigbandes durch den Umlaufkanal besonders gering ist, wenn das Verhältnis von der Länge des Verbindungsstückes in Erstreckungsrichtung des Käfigbandes zum Kugeldurchmesser Wert zwischen 0,1 und 0,5 annimmt.

Vorzugsweise sind die Äquatorringe und die Verbindungsstücke einstückig miteinander ausgebildet.

Vorzugsweise schneidet eine Längsmittelachse des Verbindungsstückes den Kugelmittelpunkt der Kugeln. Auf diese Weise können Käfigbänder hergestellt werden, bei denen eine besondere Einbaulage unbeachtlich ist.

Vorzugsweise ist das Käfigband aus Kunststoff im Spritzverfahren hergestellt.

Eine erfindungsgemäße Variante sieht vor, dass das Käfigband aus Kunststoff im Zweikomponenten-Spritzverfahren hergestellt ist, wobei die ein Komponente zur Bildung der Äquatorringe und die andere Komponente zur Bildung der Verbindungsstücke eingesetzt ist, wobei die andere Komponente durch einen elastisch leicht biegsamen Werkstoff gebildet ist. Diese elastisch leicht biegsamen Werkstoffe haben einen sehr geringen Elastizitätsmodul. Für diese Verbindungsstücke kann ein Elastomer eingesetzt werden, vorzugsweise Polyurethan.

Nachstehend wird die Erfindung an Hand von zwei in insgesamt vier Figuren abgebildeten Ausführungsbeispiel näher erläutert. Es zeigen:
- Figur 1: ein Käfigband des erfindungsgemäßen Kugelgewindetrie- bes in perspektivischer Darstellung,
- Figur 2: einen Querschnitt durch das Käfigband aus Figur 1,
- Figur 3: einen Querschnitt durch den erfindungsgemäßen Kugel- gewindetrieb im Rücklaufabschnitt des Umlaufkanals,
- Figur 5: einen Längsschnitt durch einen bekannten Kugelgewinde- trieb.

### Ausführliche Beschreibung der Zeichnung

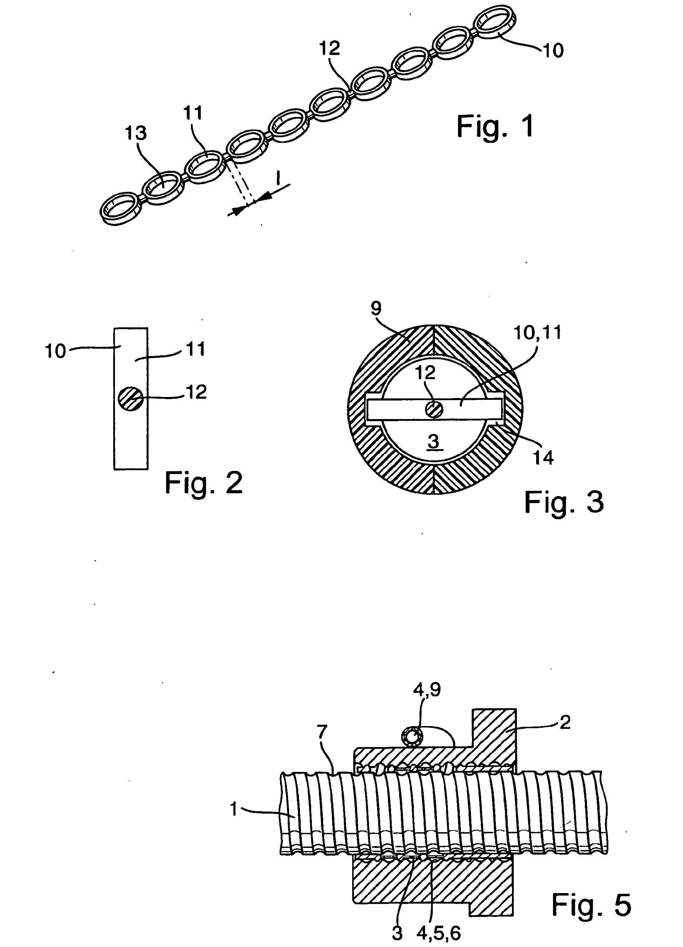

Der grundlegende Aufbau des erfindungsgemäßen Kugelgewindetriebes entspricht dem nachstehend beschriebenen bekannten Kugelgewindetrieb, wie er in Figur 5 im Längsschnitt abgebildet ist. Dieser bekannte Kugelgewindetrieb umfasst eine Kugelrollspindel 1, und eine darauf drehbar angeordnete Spindelmutter 2. Zwischen der Kugelrollspindel 1 und der Spindelmutter 2 sind Kugeln 3 in einem endlosen Umlaufkanal 4 angeordnet. Dieser endlose Umlaufkanal 4 umfasst einen Lastabschnitt 5, der begrenzt ist von einer an der Spindelmutter 2 angeordneten Gewindebahn 6 und von einer an der Kugelrollspindel 1 angeordneten Gewindebahn 7. Der Umlaufkanal 4 umfasst ferner einen Rücklaufabschnitt 9, der vorliegend durch eine etwa rohrförmig ausgebildete Außenumlenkung gebildet ist, die am Außenumfang der Spindelmutter 2 angeordnet ist. Die Kugeln 3 werden von einem Ende des Lastabschnitts durch den Rücklaufabschnitt 9 zurück zum Anfang des Lastabschnittes 5 umgelenkt. Ein endloser Kugelumlauf ist somit gewährleistet. Ferner ist ein Käfigband vorgesehen, das die Kugeln 3 aufnimmt.

Der erfindungsgemäße Kugelgewindetrieb weist ein Käfigband 10 auf, wie es beispielsweise in den Figuren 1 bis 3 abgebildet ist.

Figur 1 zeigt deutlich eine Vielzahl hintereinander angeordneter Äquatorringe 11, die die Kugeln 3 am Kugeläquator umgreifen. Einander benachbarte Äquatorringe 11 sind mittels Verbindungstücke 12 einstückig miteinander verbunden. Dieses Käfigband 10 ist aus Kunststoff im Spritzverfahren hergestellt. Jeder Äquatorring 11 weist eine Käfigtasche 13 auf, wobei jeweils eine Kugel 3 in einer Käfigtasche 13 angeordnet ist.

Der Figur 2 ist zu entnehmen, dass das Verbindungsstück im Querschnitt gesehen kreisförmig ausgebildet ist. Das Verhältnis vom Durchmesser dieses kreisförmigen Querschnitts des Verbindungsstückes 12 zum Kugeldurchmesser nimmt einen Wert an, der zwischen 0,1 bis 0,4 liegt. Bei diesem Verbindungsstück ist das Widerstandsmoment um beliebige, quer zum Käfigband 10 angeordnete Biegeachsen gleich groß.

Figur 3 zeigt im Querschnitt den Kugelgewindetrieb im Bereich des Rücklaufabschnittes 9 des Umlaufkanals 4. Deutlich ist die Anordnung der Kugeln 3 im Käfigband 10 zu erkennen. Der Rücklaufabschnitt 9 sieht einander gegenüberliegend angeordnete Nuten 14 vor, in denen die Äquatorringe 11 des Käfigbandes 10 geführt sind.

Für den beschriebenen Querschnitt des Verbindungsstückes 12 genügt dessen Länge I in Erstreckungsrichtung des Käfigbandes 12, 14 der folgenden Beziehung:
Das Verhältnis der Länge I zum Kugeldurchmesser nimmt einen Wert an, der zwischen 0,1 und 0,5 liegt.

Die Kugeln 3 weisen einen Durchmesser auf, der zwischen 3 bis 10 mm liegt.

### Bezugszahlenliste

- 1: Kugelrollspindel
- 2: Spindelmutter
- 3: Kugel
- 4: Umlaufkanal
- 5: Lastabschnitt
- 6: Gewindebahn
- 7: Gewindebahn
- 8:
- 9: Rücklaufabschnitt
- 10: Käfigband
- 11: Äquatorring
- 12: Verbindungsstück
- 13: Käfigtasche

## Patentansprüche

1. Kugelgewindetrieb, mit einer Kugelrollspindel (1) und einer darauf angeordneten Spindelmutter (2) sowie mit dazwischen angeordneten Kugeln (3), die in einem endlosen Umlaufkanal (4) umlaufen, der begrenzt ist von einer an der Spindelmutter (2) angeordneten Gewindebahn (6) und von einer an der Kugelrollspindel (1) angeordneten Gewindebahn (7), wobei ein Käfigband (10) vorgesehen ist, in dessen Käfigtaschen (13) jeweils eine der Kugeln (3) angeordnet ist, wobei die Käfigtaschen (13) an ringförmigen Äquatorringen gebildet sind, die die Kugeln (3) am Kugeläquator umgreifen, wobei einander benachbart angeordnete Äquatorringe (11) mittels Verbindungsstücke miteinander verbunden sind, wobei im Querschnitt gesehen das Verbindungsstück (12) im wesentlichen kreisförmig ausgebildet ist, **dadurch gekennzeichnet, dass** das Verhältnis vom Durchmesser des kreisförmigen Querschnitts des Verbindungsstückes (12) zum Kugeldurchmesser Werte zwischen 0,1 bis 0,4 annimmt, und wobei das Verhältnis von der Länge (I) des Verbindungsstückes (12, 14) in Erstreckungsrichtung des Käfigbandes (10) zum Kugeldurchmesser Werte zwischen 0,1 und 0,5 annimmt., und wobei der Kugeldurchmesser Werte zwischen 3 bis 10 mm annimmt.

2. Kugelgewindetrieb nach Anspruch 1, bei dem die Verbindungsstücke (12, 14) einstückig an die Äquatorringe (11) angeformt sind.

3. Kugelgewindetrieb nach Anspruch 1, bei dem eine Längsmittelachse des Verbindungsstückes (12, 14) den Kugelmittelpunkt der Kugeln (3) schneidet.

4. Kugelgewindetrieb nach Anspruch 1, bei dem das Käfigband (10) aus Kunststoff im Spritzverfahren hergestellt ist.

## Claims

1. Ball screw, with a ball-rolling spindle (1) and with a spindle nut (2) arranged thereon and also with balls (3) which are arranged between them and circulate in an endless circulation channel (4) which is delimited by a threaded track (6) arranged on the spindle nut (2) and by a threaded track (7) arranged on the ball-rolling spindle (1), a cage strip (10) being provided, in the cage pockets (13) of which in each case one of the balls (3) is arranged, the cage pockets (13) being formed on annular equatorial rings which surround the balls (3) at the ball equator, equatorial rings (11) arranged adjacently to one another being connected to one another by means of connection pieces, the connection piece (12) being of essentially circular design, as seen in cross section, **characterized in that** the ratio of the diameter of the circular cross section of the connection piece (12) to the ball diameter assumes values of between 0.1 and 0.4, and the ratio of the length (L) of the connection piece (12, 14) in the direction of extent of the cage strip (10) to the ball diameter assuming values of between 0.1 and 0.5, and the ball diameter assuming values of between 3 and 10 mm.

2. Ball screw according to Claim 1, in which the connection pieces (12, 14) are formed in one piece onto the equatorial rings (11).

3. Ball screw according to Claim 1, in which a longitudinal mid-axis of the connection piece (12, 14) intersects the ball centre point of the balls (3).

4. Ball screw according to Claim 1, in which the cage strip (10) is produced from plastic by the injection-moulding method.

## Revendications

1. Vis d'entraînement à billes, comprenant une vis à billes (1) et un écrou de broche (2) disposé par-dessus celle-ci, ainsi que des billes (3) disposées entre eux, qui circulent dans un canal périphérique sans fin (4) qui est limité par une piste filetée (6) réalisée sur l'écrou de broche (2) et par une piste filetée (7) réalisée sur la vis à billes (1), une bande de cage (10) étant prévue, dans les cavités de cage (13) de laquelle est à chaque fois disposée l'une des billes (3), les cavités de cage (13) étant formées sur des bagues équatoriales annulaires qui viennent en prise avec les billes (3) sur l'équateur des billes, des bagues équatoriales mutuellement adjacentes (11) étant connectées les unes aux autres au moyen de pièces de connexion, la pièce de connexion (12), vue en section transversale, étant réalisée de manière essentiellement circulaire, **caractérisée en ce que** le rapport du diamètre de la section transversale circulaire de la pièce de connexion (12) au diamètre de la bille valant entre 0,1 et 0,4 et le rapport de la longueur (1) de la pièce de connexion (12, 14) dans la direction d'étendue de la bande de cage (10) au diamètre de la bille valant entre 0,1 et 0,5, et le diamètre de la bille étant compris entre 3 et 10 mm.

2. Vis d'entraînement à billes selon la revendication 1, dans laquelle les pièces de connexion (12, 14) sont formées d'une seule pièce sur les bagues équatoriales (11).

3. Vis d'entraînement à billes selon la revendication 1, dans laquelle un axe médian longitudinal de la pièce de connexion (12, 14) coupe le centre des billes (3).

4. Vis d'entraînement à billes selon la revendication 1, dans laquelle la bande de cage (10) est fabriquée en plastique par un procédé de pulvérisation.
